# EUROPEAN PATENT APPLICATION

(11) **EP 2 239 748 A1**
(43) Date of publication of application: **13.10.2010**
(21) Application number: 10159099.0
(22) Date of filing: 06.04.2010
(51) Int. Cl.: H01G 9/028, H01G 9/15

(54) **Solid electrolytic capacitor and its manufacturing method**

(30) Priority: 07.04.2009 JP 2009092691
(71) Applicant: NEC TOKIN Corporation, Sendai-shi, Miyagi 982-8510 (JP)
(72) Inventor: Nobuta, Tomoki, Miyagi 982-8510 (JP); Sugawara, Yasuhisa, Miyagi 982-8510 (JP); Suzuki, Satoshi, Miyagi 982-8510 (JP); Takahashi, Naoki, Miyagi 982-8510 (JP); Kobayakawa, Ryuta, Miyagi 982-8510 (JP)
(74) Representative: Vossius & Partner

(57) **Abstract**

In a solid electrolytic capacitor whose cathode is formed by forming an oxide film 2 on an anode-body valve-action metal 1, and forming a conductive polymer layer 3, a graphite layer 4, and a silver layer 5 in succession on the oxide film, the conductive polymer layer 3 contains a sulfonic acid ester compound. In this way, a solid electrolytic capacitor having a low ESR and an excellent moisture resistance and its manufacturing method can be provided.

## Description

This application is based upon and claims the benefit of priority from Japanese patent application No.2009-092691, filed on April 7, 2009, the disclosure of which is incorporated herein in its entirety by reference.

The present invention relate to a solid electrolytic capacitor and its manufacturing method.

In recent years, as electronic devices have become smaller, faster, and digitized, the miniaturization, the increase in capacity, and the decrease in the ESR (Equivalent Series Resistance) of capacitors used in such electronic devices have been strongly desired. To achieve the lower ESR, solid electrolytic capacitors using conductive polymers having high conductivity have been proposed. Such capacitors have a lower ESR because they use material having a lower resistance in comparison to conventional electrolytic-solution type capacitors and manganese-dioxide type capacitors.

In conductive polymer type solid electrolytic capacitors, an oxide film is formed on a surface of a porous valve-action metal, which is used as the anode body, to form a dielectric layer, and then a conductive polymer layer is formed on the dielectric layer.

As for the formation method for such conductive polymer layers, a method for forming a conductive polymer on an oxide film by chemical polymerization or electrolytic polymerization of a monomer has been known. Further, a method for forming a conductive polymer on an oxide film directly from a conductive polymer solution or dispersion liquid has been also known.

Note that to manufacture a solid electrolytic capacitor having a low ESR, it is necessary that the oxide film and the conductive polymer layer should have excellent adhesiveness therebetween. In the method for forming a conductive polymer on an oxide film directly from a conductive polymer solution or dispersion liquid, in particular, the adhesiveness is typically poor due to the effects such as the contraction of the conductive polymer film that occurs when the conductive polymer solution or dispersion liquid is dried/cured.

Further, as another example, a method in which polymerization is carried out in a solution containing a non-ionic surfactant has been known as a method for forming a conductive polymer layer having excellent adhesiveness on an oxide film by polymerization of a monomer.

Polyaniline, polypyrrole, and poly(3,4-ethylenedioxythiophene) have been known as a conductive polymer that can be used as a solid electrolyte of such solid electrolytic capacitors. In general, an organic acid such as a sulfonic acid coexists as a dopant.

Since an organic acid is contained in the conductive polymer as described above, the conductive polymer type solid electrolytic capacitor is strongly affected by the acid when moisture absorption occurs, and thus posing a problem that the resistance to moisture is poor.

To cope with this problem, Japanese Unexamined Patent Application Publication No.2007-96284, for example, discloses that a solid electrolytic capacitor having an excellent moisture resistance can be provided by providing a polystyrene sulfonate layer formed between the anode oxide film layer and the conductive polymer layer.

However, in the method like this in which a polystyrene sulfonate layer is provided as a precoat layer, since the conductive polymer formed on the precoat layer is similar to the conventional conductive polymer, the precoat layer needs to be formed in a large thickness in order to reduce the effect of the acid. However, since the organic material used for the precoat layer is electrically non-conductive, the ESR could increase.

An exemplary technical problem to be solved by the present invention is to provide a solid electrolytic capacitor having a low ESR and an excellent moisture resistance and its manufacturing method.

An exemplary aspect of the present invention is a solid electrolytic capacitor whose cathode is formed by forming an oxide film on an anode-body valve-action metal, and forming a conductive polymer layer, a graphite layer, and a silver layer in succession on the oxide film, wherein the conductive polymer layer contains a sulfonic acid ester compound.

In the solid electrolytic capacitor in accordance with an exemplary aspect of the present invention, the sulfonic acid ester compound is formed by combining a sulfonic acid compound contained in a conductive polymer as a dopant with a non-ionic surfactant having a hydroxyl group in an ester bond.

In the solid electrolytic capacitor in accordance with an exemplary aspect of the present invention, the sulfonic acid compound is a sulfonic acid polymer compound.

In the solid electrolytic capacitor in accordance with an exemplary aspect of the present invention, the sulfonic acid polymer compound is polystyrene sulfonate.

Another exemplary aspect of the present invention is a method of manufacturing a solid electrolytic capacitor whose cathode is formed by forming an oxide film on an anode-body valve-action metal, and forming a conductive polymer layer, a graphite layer, and a silver layer in succession on the oxide film, wherein the formation method of the conductive polymer layer containing a sulfonic acid ester compound includes: dissolving a non-ionic surfactant having a hydroxyl group into a conductive polymer solution or dispersion liquid containing a sulfonic acid polymer compound as a dopant and applying the resultant conductive polymer solution or dispersion liquid to the oxide film; and dehydrating and condensing the applied conductive polymer solution or dispersion liquid by heating and drying.

In accordance with an exemplary aspect of the present invention, an excessive amount of a sulfonic acid existing in the conductive polymer layer and a hydroxyl group of a non-ionic surfactant are esterified, and as a result, the effect of the sulfonic acid on the oxide film that is caused when moisture absorption occurs is reduced. Therefore, it becomes possible to provide a solid electrolytic capacitor having a low ESR and an excellent moisture resistance and its manufacturing method.

The above and other objects, features and advantages of the present invention will become more fully understood from the detailed description given hereinbelow and the accompanying drawings which are given by way of illustration only, and thus are not to be considered as limiting the present invention.

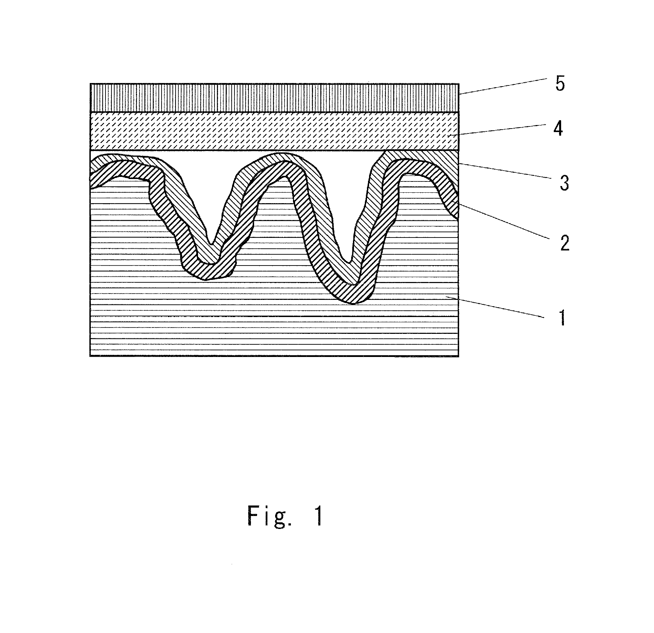

Fig. 1 is a cross-section showing a part of a solid electrolytic capacitor in accordance with an exemplary aspect of the present invention.

Exemplary embodiments of the present invention are explained hereinafter.

Fig. 1 is a cross-section showing a part of a solid electrolytic capacitor in accordance with an exemplary aspect of the present invention. An oxide film 2 is formed on a surface of an anode-body valve-action metal 1. The oxide film 2, which is dielectric, is formed by an anode oxidation method or the like.

A conductive polymer layer 3 is formed on the oxide film 2. As for the formation method of the conductive polymer layer, either a method by chemical polymerization or electrolytic polymerization using a monomer or a method for forming a conductive polymer layer on an oxide film directly from a conductive polymer solution or dispersion liquid may be used. However, the method for forming a conductive polymer layer on an oxide film directly from a conductive polymer solution or dispersion liquid is preferable in terms of characteristics.

In either of the formation methods, a sulfonic acid polymer compound is preferably used as the dopant. This is because low-molecular compounds such as a mono-sulfonic acid would be removed by the cleaning even if they excessively exist. Therefore, they do not function as the dopant.

The conductive polymer solution or dispersion liquid is preferably used after dissolving a non-ionic surfactant therein. Examples of the non-ionic surfactant used for that purpose include polyethylene glycol, polyethylene glycol monoalkyl ether, fatty acid polyethylene glycol ester, and fatty acid sorbitan ester. However, it is not limited to these examples, and any non-ionic surfactant having a hydroxyl group may be used.

The amount of the non-ionic surfactant having a hydroxyl group to be dissolved is preferably no less than 0.001 wt% and no larger than 10 wt% with respect to the conductive polymer solution or dispersion liquid. Though depending on the type of non-ionic surfactant to be used, the dissolved amount less than 0.001 wt% falls short of the critical micelle concentration. On the other hand, the dissolved amount larger than 10 wt% leaves an excessive amount of the non-ionic surfactant in the conductive polymer layer, and thus impairing the conductivity. Further, the dissolved amount is more preferably no less than 0.001 wt% and no larger than 3 wt%.

The conductive polymer solution or dispersion liquid in which a non-ionic surfactant is dissolved is applied to an oxide film, and then dried, preferably, at a temperature no lower than 100 °C and no higher than 230 °C, and more preferably, at a temperature no lower than 150 °C and no higher than 200 °C. A dehydration and condensation reaction between the sulfonic acid and the hydroxyl group advances by this heating and drying process, and thereby transforming them into a sulfonic acid ester. In this process, if the drying temperature is lower than 100 °C, the reaction does not advance sufficiently. On the other hand, if it is higher than 230 °C, the organic material such as the conductive polymer could be decomposed.

Even a minimal amount of the sulfonic acid ester compound present in the conductive polymer layer is effective, because an advantageous effect could be obtained by just esterifying the sulfonic acid in the sulfonic acid polymer compound that does not function as the dopant.

After the conductive polymer layer 3 is formed in this manner, a graphite layer 4 and a subsequent silver layer 5 are formed to manufacture a solid electrolytic capacitor.

By esterifying an excessive amount of the sulfonic acid existing in the conductive polymer layer and the hydroxyl group of the non-ionic surfactant, the effect of the sulfonic acid on the oxide film that is caused when moisture absorption occurs can be reduced.

That is, it becomes possible to suppress the deterioration of the ESR, which would otherwise occur when the conductive polymer becomes non-conductive by Joule heat of a leak current generated from defects in the formed oxide film caused by the sulfonic acid. Therefore, it becomes possible to provide a solid electrolytic capacitor having a low ESR and an excellent moisture resistance and its manufacturing method.

By using a non-ionic surfactant as the origin of the hydroxyl group, a low-melting component is contained in the conductive polymer layer and thereby providing an advantageous effect as a plasticizer. In this way, it becomes possible to suppress the film contraction that occurs when the conductive polymer solution or dispersion liquid is dried/cured, and the film contraction that occurs due to repetitive occurrences of moisture absorption/drying. Therefore, the deterioration of adhesiveness with the oxide film is prevented, and thus improving the moisture resistance. Further, since the adhesiveness with the oxide film is improved, the ESR of a solid electrolytic capacitor can be reduced.

A method of manufacturing a solid electrolytic capacitor in accordance with an exemplary aspect of the present invention includes forming a cathode by forming an oxide film on an anode-body valve-action metal, and forming a conductive polymer layer, a graphite layer, and a silver layer in succession on the oxide film. The formation method of the conductive polymer layer containing a sulfonic acid ester compound includes dissolving a non-ionic surfactant having a hydroxyl group into a conductive polymer solution or dispersion liquid containing a sulfonic acid polymer compound as a dopant and applying the resultant conductive polymer solution or dispersion liquid to the oxide film, and dehydrating and condensing the applied conductive polymer solution or dispersion liquid by heating and drying.

### Example

Practical examples of the present invention are explained in detail hereinafter.

### Example 1

Tantalum (Ta) was used as the anode-body valve-action metal. As for the conductive polymer dispersion liquid, a dispersion liquid of commercially-available poly(3,4-ethylenedioxythiophene)/polystyrene sulfonate was used.

Polyethylene glycol monostearate was used as the non-ionic surfactant, and dissolved in 0.8 wt%.

This mixed solution of the conductive polymer dispersion liquid and the non-ionic surfactant was dropped in 100µl on a tantalum plate on which an oxide film was formed in advance, dried at 180 °C for one hour, and then submerged in water to evaluate the adhesive/bonding properties. The evaluation was made by determining whether peeling occurred or not when it was submerged in water.

Next, a tantalum pellet(s) that was prepared by forming an oxide film on an anode-body valve-action metal was submerged in the mixed solution of a conductive polymer dispersion liquid and a non-ionic surfactant, and then dried at 180 °C for one hour. This process was repeated three times to form a conductive polymer layer.

After manufacturing the conductive polymer layer in this way, a graphite layer and a silver layer were successively formed to manufacture a solid electrolytic capacitor.

The ESR of the manufactured solid electrolytic capacitor was measured at a frequency of 100 kHz by using a LCR meter. Further, the ESR was measured again after a moisture resistance test (1000 hours) was carried out in a 95 % RH (Relative Humidity) atmosphere at 65 °C. Measurement results of ESRs are converted such that the entire area of the cathode portion is standardized to a unit area (1 cm²), and shown below.

### Example 2

Polyethylene glycol monostearate was used and dissolved as the non-ionic surfactant to manufacture a solid electrolytic capacitor in a similar manner to that of Example 1. However, the polyethylene glycol monostearate was dissolved in 0.4 wt% in the Example 2.

Prior to the manufacture of the solid electrolytic capacitor, the mixed solution of the conductive polymer dispersion liquid and the non-ionic surfactant was dropped in 100 µl on a tantalum plate on which an oxide film was formed in advance, dried at 180 °C for one hour, and then submerged in water to evaluate the adhesive/bonding properties. The evaluation was made by determining whether peeling occurred or not when it was submerged in water.

The ESR of the manufactured solid electrolytic capacitor was measured at a frequency of 100 kHz by using a LCR meter. Further, the ESR was measured again after a moisture resistance test (1000 hours) was carried out in a 95 % RH atmosphere at 65 °C. Measurement results of ESRs are converted such that the entire area of the cathode portion is standardized to a unit area (1 cm²), and shown below.

### Example 3

A solid electrolytic capacitor was manufactured in a similar manner to that of Example 1 except that sorbitan monostearate was used as the non-ionic surfactant.

Prior to the manufacture of the solid electrolytic capacitor, the mixed solution of the conductive polymer dispersion liquid and the non-ionic surfactant was dropped in 100µl on a tantalum plate on which an oxide film was formed in advance, dried at 180 °C for one hour, and then submerged in water to evaluate the adhesive/bonding properties. The evaluation was made by determining whether peeling occurred or not when it was submerged in water.

The ESR of the manufactured solid electrolytic capacitor was measured at a frequency of 100 kHz by using a LCR meter. Further, the ESR was measured again after a moisture resistance test (1000 hours) was carried out in a 95 % RH atmosphere at 65 °C. Measurement results of ESRs are converted such that the entire area of the cathode portion is standardized to a unit area (1 cm²), and shown below.

### Example 4

A solid electrolytic capacitor was manufactured in a similar manner to that of Example 1 except that polyethylene glycol monododecyl ether was used as the non-ionic surfactant.

Prior to the manufacture of the solid electrolytic capacitor, the mixed solution of the conductive polymer dispersion liquid and the non-ionic surfactant was dropped in 100µl on a tantalum plate on which an oxide film was formed in advance, dried at 180 °C for one hour, and then submerged in water to evaluate the adhesive/bonding properties. The evaluation was made by determining whether peeling occurred or not when it was submerged in water.

The ESR of the manufactured solid electrolytic capacitor was measured at a frequency of 100 kHz by using a LCR meter. Further, the ESR was measured again after a moisture resistance test (1000 hours) was carried out in a 95 % RH atmosphere at 65 °C. Measurement results of ESRs are converted such that the entire area of the cathode portion is standardized to a unit area (1 cm²), and shown below.

### Comparative example

A solid electrolytic capacitor was manufactured in a similar manner to that of Example 1 except that no non-ionic surfactant was added.

Prior to the manufacture of the solid electrolytic capacitor, the mixed solution of the conductive polymer dispersion liquid and the non-ionic surfactant was dropped in 100 µl on a tantalum plate on which an oxide film was formed in advance, dried at 180 °C for one hour, and then submerged in water to evaluate the adhesive/bonding properties. The evaluation was made by determining whether peeling occurred or not when it was submerged in water.

The ESR of the manufactured solid electrolytic capacitor was measured at a frequency of 100 kHz by using a LCR meter. Further, the ESR was measured again after a moisture resistance test (1000 hours) was carried out in a 95 % RH atmosphere at 65 °C. Measurement results of ESRs are converted such that the entire area of the cathode portion is standardized to a unit area (1 cm²), and shown below.

For Examples 1 to 4 and Comparative example, results obtained by determining the presence or absence of peeling after the submergence in water are shown in the following Table 1 as the adhesive/bonding property evaluation after the submergence in water.

**Table 1**

| | Presence or absence of peeling after submergence in water |
|---|---|
| Example 1 | no peeling occurs |
| Example 2 | no peeling occurs |
| Example 3 | no peeling occurs |
| Example 4 | no peeling occurs |
| Comparative example | peeling occurs |

In accordance with an exemplary aspect of the present invention, it is obvious as shown in Table 1 that adhesive/bonding properties with the oxide film are improved by the transformation into the sulfonic acid ester carried out by the application/drying of the mixed solution of a conductive polymer dispersion liquid and a non-ionic surfactant.

Table 2 shows ESRs measured immediately after manufacturing, ESRs after moisture resistance tests, and rates of changes in ESRs for Examples 1 to 4 and Comparative example.

**Table 2**

| | ESR immediately after manufacturing (mΩ·cm²) | ESR after moisture resistance evaluation (mΩ·cm²) | rate of change in ESR (%) |
|---|---|---|---|
| Example 1 | 0.61 | 0.67 | 110 |
| Example 2 | 0.68 | 0.79 | 115 |
| Example 3 | 0.65 | 0.73 | 112 |
| Example 4 | 0.72 | 0.83 | 115 |
| Comparative example | 1.27 | 1.65 | 130 |

In Examples 1 to 4, ESRs measured immediately after the manufacturing at which solid electrolytic capacitors are manufactured are reduced. This is because the adhesiveness between the oxide film and the conductive polymer layer is improved, and the interface resistance thereby decreases.

The moisture resistance can be determined by measuring how much the ESR increases in a high-temperature and high-humidity atmosphere. The less the ESR increases, the higher moisture resistance the solid electrolytic capacitor has. As seen from the results shown in Table 2, Examples 1 to 4 has lower ESRs, and thus higher moisture resistance in comparison to Comparative example.

In accordance with an exemplary aspect of the present invention, it has been confirmed that by esterifying a non-ionic surfactant with a sulfonic acid and leaving the resultant ester in the conductive polymer layer, an advantageous effect as a plasticizer is obtained. As a result, the swelling of the film due to the moisture resistance evaluation is suppressed and the adhesiveness with the oxide film thereby does not deteriorate. In addition, an excessive amount of the sulfonic acid is reduced by esterification and the effect on the oxide film that is caused when moisture absorption occurs is thereby suppressed, thus also improving the moisture resistance.

As has been described so far, it has been found out that the present invention can provide a solid electrolytic capacitor having a low ESR and an excellent moisture resistance and its manufacturing method.

Exemplary embodiments of the present invention have been explained above by using practical examples. However, the present invention is not limited to these practical examples, and various design modifications can be made without departing from the spirit of the present invention. That is, any modifications and corrections that could be easily made by those skilled in the art are included in the scope of the present invention.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A solid electrolytic capacitor whose cathode is formed by forming an oxide film on an anode-body valve-action metal, and forming a conductive polymer layer, a graphite layer, and a silver layer in the listed order on the oxide film,
wherein the conductive polymer layer contains a sulfonic acid ester compound.

2. The solid electrolytic capacitor according to Claim 1, wherein the sulfonic acid ester compound is formed by ester bining a sulfonic acid compound contained in a conductive polymer as a dopant with a non-ionic surfactant having a hydroxyl group.

3. The solid electrolytic capacitor according to Claim 2, wherein the sulfonic acid compound is a sulfonic acid polymer compound.

4. The solid electrolytic capacitor according to Claim 3, wherein the sulfonic acid polymer compound is polystyrene sulfonate.

5. A method of manufacturing a solid electrolytic capacitor whose cathode is formed by forming an oxide film on an anode-body valve-action metal, and forming a conductive polymer layer, a graphite layer, and a silver layer in the listed order on the oxide film,
wherein a formation method of the conductive polymer layer containing a sulfonic acid ester compound comprises:
dissolving a non-ionic surfactant having a hydroxyl group into a conductive polymer solution or dispersion liquid containing a polymer compound having sulfonic acid as a dopant and applying the resultant conductive polymer solution or dispersion liquid to the oxide film; and
dehydrating and condensing the applied conductive polymer solution or dispersion liquid by heating and drying.
